Europäisches Patentamt

European Patent Office

Office européen des brevets

(19)

(11) EP 1 487 095 A1

(12) **EUROPÄISCHE PATENTANMELDUNG**

(43) Veröffentlichungstag:
  **15.12.2004 Patentblatt 2004/51**

(51) Int Cl.⁷: **H02P 3/18**, H02P 21/00

(21) Anmeldenummer: **04008989.8**

(22) Anmeldetag: **15.04.2004**

(84) Benannte Vertragsstaaten:
  **AT BE BG CH CY CZ DE DK EE ES FI FR GB GR HU IE IT LI LU MC NL PL PT RO SE SI SK TR**
  Benannte Erstreckungsstaaten:
  **AL HR LT LV MK**

(30) Priorität: **11.06.2003 DE 10326328**

(71) Anmelder: **SIEMENS AKTIENGESELLSCHAFT**
  **80333 München (DE)**

(72) Erfinder:
  • **Bauer, Franz, Dr.**
    **91074 Herzogenaurach (DE)**
  • **Schierling, Hubert, Dr.**
    **91052 Erlangen (DE)**
  • **Wesselak, Viktor, Dr.**
    **91080 Spardorf (DE)**

(54) **Verfahren und Vorrichtung zum Bremsen einer drehzahlveränderbaren Asynchronmaschine**

(57)  Die Erfindung bezieht sich auf ein Verfahren zum Bremsen einer drehzahlveränderbaren Asynchronmaschine (2), die von einem spannungseinprägenden Umrichter (4) gespeist wird, dessen Regeleinrichtung (6) einen Spannungs-Sollzeiger ($\underline{U}$*) als Stellgröße bereitstellt und auf eine Vorrichtung zur Durchführung dieses Verfahrens. Erfindungsgemäß wird während eines Bremsvorgangs dieser Spannungs-Sollzeiger ($\underline{U}$*) derart mittels eines Zusatzsignals ($\Delta\underline{U}$*) moduliert, dass in der Asynchronmaschine (2) hohe Verluste entstehen. Somit erhält man ein schnelles Bremsverfahren, das für eine U/f-Steuerung und eine Vektorregelung geeignet ist, das kein Istwert sondern nur Maschinenparameter benötigt, und wobei ein durch eine Steuerung/Regelung gegebener Betriebspunkt (A) erhalten bleibt.

## FIG 1

EP 1 487 095 A1

**Beschreibung**

Die Erfindung bezieht sich auf ein Verfahren zum Bremsen einer drehzahlveränderbaren Asynchronmaschine, die von einem spannungseinprägenden Umrichter gespeist wird, dessen Regeleinrichtung einen Spannungs-Sollzeiger als Stellgröße bereitstellt und auf eine Vorrichtung zur Durchführung dieses Verfahrens.

Bei Standardantrieben mit Pulswechselrichter und Asynchronmotor wird zur Speisung eines Zwischenkreises meist eine Diodenbrücke verwendet. Diese Lösung ist kostengünstig. Sie erlaubt es jedoch nicht, Energie, die z.B. beim Abbremsen maschinenseitig erzeugt wird, aus dem Zwischenkreis in das Netz zu speisen. Ohne weitere Maßnahmen darf daher nur so schnell abgebremst werden, dass die mechanische Bremsleistung die Gesamtverluste des Antriebs nicht übersteigt. Würde schneller abgebremst werden, käme es zur Überladung des Zwischenkreises.

Um dies zu vermeiden, können verschiedene Maßnahmen getroffen werden. Eine Möglichkeit ist die Begrenzung der Zwischenkreisspannung über die Beeinflussung der dem Zwischenkreis von der Motorseite her zufließenden Energie. In der Regel wird hierfür ein Zwischenkreis-Spannungsregler eingesetzt. Dieser wird aktiv, wenn die Zwischenkreisspannung einen Maximalwert überschreitet. Bei einer U/f-Steuerung greift der Regler auf die Änderungsgeschwindigkeit der Motorfrequenz ein, bei einer feldorientierten Regelung wird der generatorische Begrenzungswert des drehmomentbildenden Stromes oder Sollmomentes reduziert. Beide Eingriffe führen zur Verringerung des generatorischen Drehmoments und somit der in den Zwischenkreis rückgespeisten Leistung und damit zur Verringerung bzw. der Vermeidung der Überladung. Die Bremswirkung ist begrenzt, weil die Bremsenergie den Verlusten im Antriebssystem entsprechen muss. Die Verluste sind bei höheren Drehzahlen sehr klein, weil der Motor nahezu im Leerlauf betrieben wird. Der Bremsvorgang kann dadurch insbesondere bei Antrieben mit hohem Systemwirkungsgrad unbefriedigend lange dauern.

Als weitere Möglichkeit zur Vermeidung von Überspannungen im Zwischenkreis kann ein Chopper mit Bremswiderstand eingesetzt werden, was allerdings einen erheblichen Kostenfaktor bedeutet. Bei dieser Chopperschaltung wird üblicherweise ein geschalteter Widerstand parallel zum Zwischenkreiskondensator geschaltet, um die Bremsleistung aufzunehmen. Dies macht zusätzliche leistungs- und steuerungselektronische Komponenten erforderlich und vergrößert damit die Kosten des Wechselstromantriebs und vermindert seine Zuverlässigkeit.

Um den Einsatz eines geschalteten Widerstandes oder anderer Energie abführender Bauelemente zu vermeiden und dadurch die Kosten zu senken, ist es bekannt, die regenerierte Energie im Asynchronmotor und teilweise im Umrichter zu verbrauchen. Es ist allgemein bekannt, dass im Bremsfall bei Teillastbetrieb bei allen Motoren jeglicher Leistungsklasse die meisten Motorverluste im Stator auftreten. Die Rotorverluste sind klein im Vergleich zu den Statorkupferverlusten und den Statoreisenverlusten.

Aus der EP 1 077 527 B1 ist ein Verfahren zur Bremsung eines feldorientiert betriebenen Asynchronmotors, eine Regelvorrichtung zur Verfahrensausführung und ein Speichermedium bekannt. Bei diesen Verfahren wird während des Abbremsvorgangs zur Erhöhung der Verluste im Motor und Umrichter dem feldbildenden Strom ein zusätzlicher Wechselanteil überlagert. Dadurch verkürzt sich der Bremsvorgang zum Teil erheblich. Das Verfahren ist allerdings nur für feldorientiert geregelte Antriebe anwendbar.

In der DE 195 09 974 C2 ist ein Verfahren angegeben, bei dem zur Erhöhung der Verluste der Magnetisierungsstrom über seinen Nennwert hinaus erhöht wird. Die entstehende Verlustleistung ist nicht optimal, weil im Läufer praktisch keine Verluste entstehen. In der Feldschwächung ist das Verfahren nicht anwendbar.

Neben diesen bekannten Verfahren zur Bremsung einer stromrichtergespeisten Asynchronmaschine gibt es die Gleichstrombremsung. Bei diesen bekannten Verfahren des Gleichstrombremsens wird zunächst der Drehfluss aus der Maschine gebracht und anschließend ein Gleichstrom eingeprägt. Dieser Vorgang dauert naturgemäß eine gewisse Zeit und führt zu insgesamt vergleichsweise großen Bremszeiten. Das Verfahren ist neben dem U/f-Betrieb auch für die feldorientiert geregelte Antriebe geeignet, jedoch wird im letzteren Fall während des Bremsvorgangs der geregelte Betrieb verlassen. Das Verfahren ermöglicht das Stillsitzen des Antriebs, nicht jedoch das Abbremsen auf eine niedrigere Drehzahl, da die Motordrehzahl bei Gleichstromspeisung ohne Tacho nicht mehr ermittelt werden kann. Die Bremswirkung ist vergleichsweise gering, weil im Motor keine Eisenverluste entstehen und die Ständerverluste aus dem Netz gedeckt werden.

Der Erfindung liegt nun die Aufgabe zugrunde, ein Verfahren zum Bremsen einer drehzahlgeregelten Asynchronmaschine anzugeben, mit dem möglichst hohe Verluste im Antriebssystem erzielt werden können und wobei dieses Verfahren sowohl bei U/f-gesteuerten als auch bei vektorgeregelten Antrieben im gesamten Betriebsbereich anwendbar ist.

Diese Aufgabe wird erfindungsgemäß mit den Merkmalen des Anspruchs 1 bzw. mit dem kennzeichnenden Merkmal des Anspruchs 16 gelöst.

Dadurch, dass während des Bremsvorgangs ein Spannungs-Sollzeiger moduliert wird, entstehen so hohe Verluste in der drehzahlgeregelten Asynchronmaschine, dass diese abgebremst bzw. zum Stillstand gebracht werden kann. Da es für das erfindungsgemäße Verfahren unerheblich ist, wie der Spannungs-Sollzeiger generiert worden ist, kann das erfindungsgemäße Bremsverfahren sowohl bei U/f-gesteuerten als auch bei vektorgeregelten Antrieben im gesamten Betriebsbereich eingesetzt werden.

Die erfindungsgemäße Bremsvorrichtung weist eine Signalquelle, ein Netzwerk und eine Aufschalteinrichtung auf. Mittels der Signalquelle wird ein Wechselsignal, insbesondere ein Rechtecksignal, generiert, aus dem das Netzwerk mit Hilfe von Regler- und Streckenparameter ein Zusatzsignal generiert. Dieses Zusatzsignal wird mittels der Aufschalteinrichtung auf einen Spannungs-Sollzeiger aufgeschaltet, der von einer U/f- bzw. einer Vektor-Regeleinrichtung bereitgestellt wird. Durch diesen erfindungsgemäßen Aufbau der Vorrichtung zum Bremsen einer drehzahlgeregelten Asynchronmaschine kann man jedes Antriebssystem mit dieser erfindungsgemäßen Bremsvorrichtung einfach nachrüsten. Dazu muss nur die Stellgröße einer Regeleinrichtung mit einem Eingang der Bremsvorrichtung und ein Ausgang dieser Bremsvorrichtung mit einem Eingang eines Steuersatzes eines spannungseinprägenden Umrichters verbunden werden.

Bei einem vorteilhaften Verfahren ist das Zusatzsignal ein Wechselsignal, dessen Frequenzwert größer als der Kehrwert einer Läuferzeitkonstante der drehzahlgeregelten Asynchronmaschine ist. Dadurch wird erreicht, dass der Läuferfluss der Asynchronmaschine von dem Zusatzsignal annähernd unbeeinflusst bleibt. Somit verhält sich das System näherungsweise linear, d.h. die Gesamtwirkung der Summe der Eingangsgrößen ergibt sich aus der Summe der Einzelwirkungen.

Bei einem weiteren Verfahren ist das Zusatzsignal derart ausgebildet, dass ein Läuferstrom einen annähernd rechteckförmigen Verlauf aufweist, deren Ober- und Untergrenzen von der Stromtragfähigkeit des spannungseinprägenden Umrichters bestimmt werden. Somit werden die Kupferverluste im Läufer maximiert.

Bei einem weiteren Verfahren ist das Zusatzsignal derart ausgebildet, dass sein Integral keinen Gleichanteil aufweist. Somit wird der durch den regulären Betrieb gegebene Arbeitspunkt nicht verschoben.

Bei einem weiteren vorteilhaften Verfahren wird das Zusatzsignal während des Bremsvorgangs derart zu- und abgeschaltet, dass das Integral des Integrals des Zusatzsignals mittelwertfrei ist. Somit ist auch gewährleistet, dass der Mittelwert des Läuferflusses und damit der Arbeitspunkt sich nicht ändern.

Vorteilhafte Ausgestaltungen der Vorrichtung zum Bremsen einer drehzahlgeregelten Asynchronmaschine sind den Unteransprüchen 17 bis 20 zu entnehmen.

Zur weiteren Erläuterung der Erfindung wird auf die Zeichnung Bezug genommen, in der mehrere Ausführungsbeispiele der erfindungsgemäßen Bremsvorrichtung schematisch veranschaulicht sind.

| | |
|---|---|
| FIG 1 | zeigt eine Grundstruktur der Vorrichtung zur Durchführung des erfindungsgemäßen Verfahrens zum Bremsen, in der |
| FIG 2 | ist das inverse Γ-Ersatzschaltbild einer Asynchronmaschine veranschaulicht, die |
| FIG 3 | zeigt ein stationäres Zeigerdiagramm einer Asynchronmaschine für generatorisches Bremsen mit einer durch das Zusatzsignal bewirkten Ständerflussänderung, die |
| FIGUREN 4 bis 6 | zeigen jeweils in einem Diagramm über der Zeit t Zeitverläufe für den Wechselanteil des Ständerflusses, des Zusatzsignals und den daraus resultierenden Ständer- und Läuferstrom in der |
| FIG 7 | ist die Ortsgruppe eines modulierten Spannungs-Sollzeigers im feldorientierten Koordinatensystem unter der Annahme $R_S$, $R_R \approx 0$ dargestellt, die |
| FIG 8 | zeigt eine vorteilhafte Ausgestaltung der Grundstruktur der Vorrichtung nach FIG 3, die |
| FIG 9 | und 10 zeigen jeweils in einem Diagramm über der Zeit t Signalverläufe der Komponenten des Zusatzsignals, die |
| FIG 11 | zeigt in einem mit dem Spannungszeiger rotierenden Koordinatensystem jeweils eine Ortskurve eines modulierten Spannungs-Sollzeigers und eines zugehörigen Ständerstromzeigers, in der |
| FIG 12 | ist eine erste Ausführungsform einer Aufschalteinrichtung der Bremsvorrichtung nach der Erfindung veranschaulicht, wobei in den |
| FIG 13 | bis 15 jeweils weitere Ausführungsformen einer Aufschalteinrichtung der erfindungsgemäßen Bremsvorrichtung veranschaulicht sind, die |
| FIG 16 | zeigt ein erstes Ausführungsbeispiel für eine Signalquelle und ein Netzwerk der Bremsvorrichtung nach der Erfindung, wobei in der |
| FIG 17 | ein Ausführungsbeispiel für die Signalquelle und das Netzwerk mit einer komponentenweise Aufschaltung des Zusatzsignals veranschaulicht ist, die |
| FIG 18 | bis 21 zeigen jeweils in einem Diagramm über Zeit t Zeitverläufe der Signale des Ausführungsbeispiels nach FIG 17 und die |
| FIG 22 | zeigt eine Ausführungsform der erfindungsgemäßen Bremsvorrichtung mit dem Ausführungsbeispiel für die Signalquelle und das Netzwerk nach FIG 17 und der Aufschalteinrichtung nach FIG 15 wobei die Signalquelle sanft zu- und wegschaltbar ausgeführt ist. |

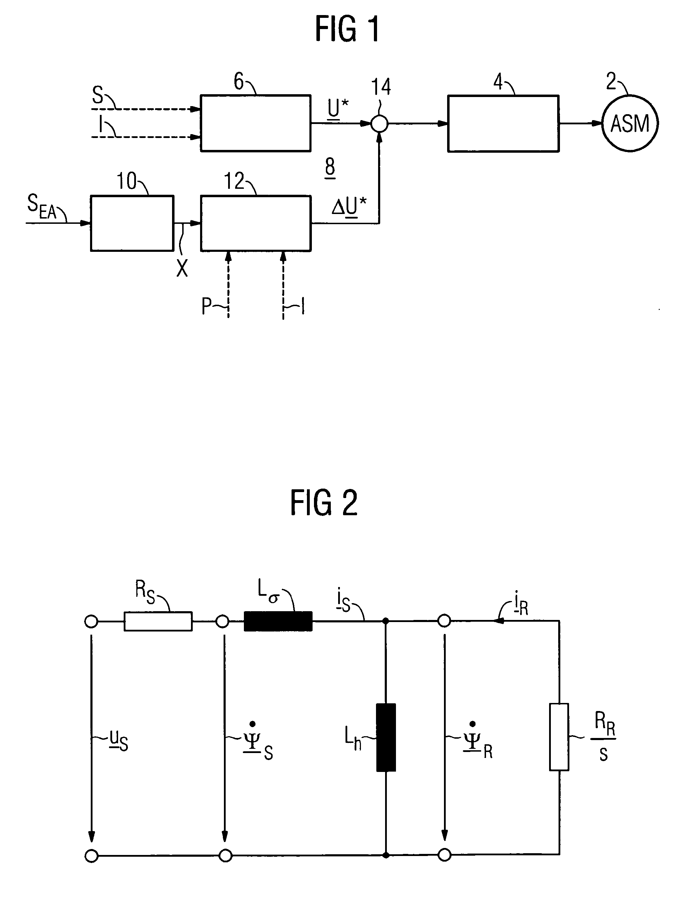

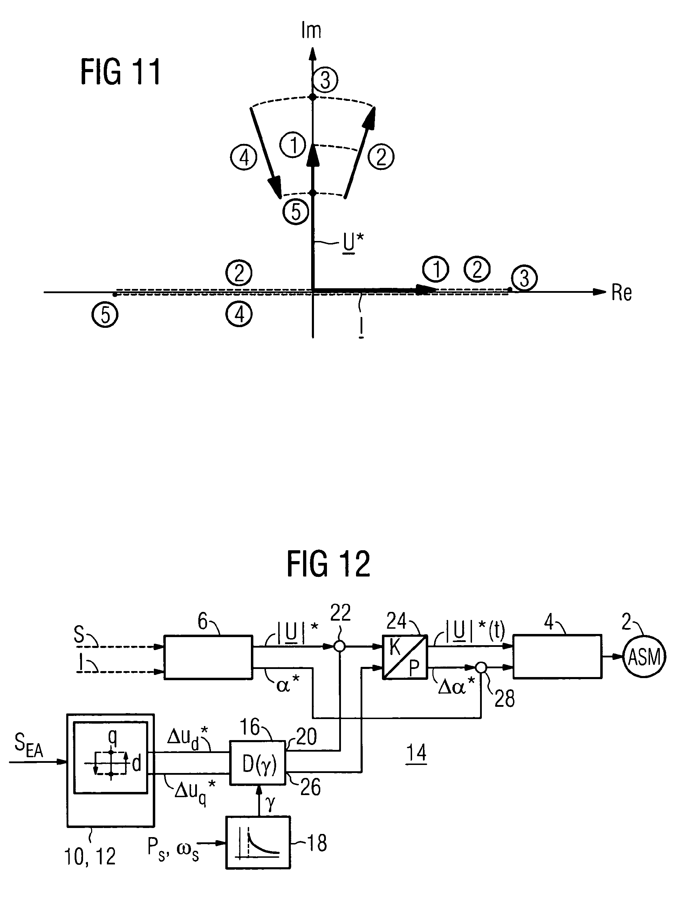

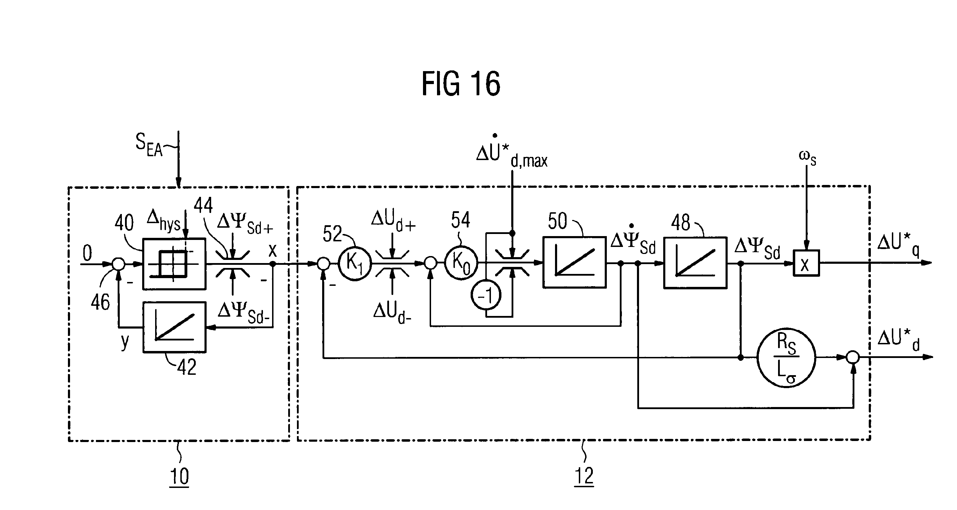

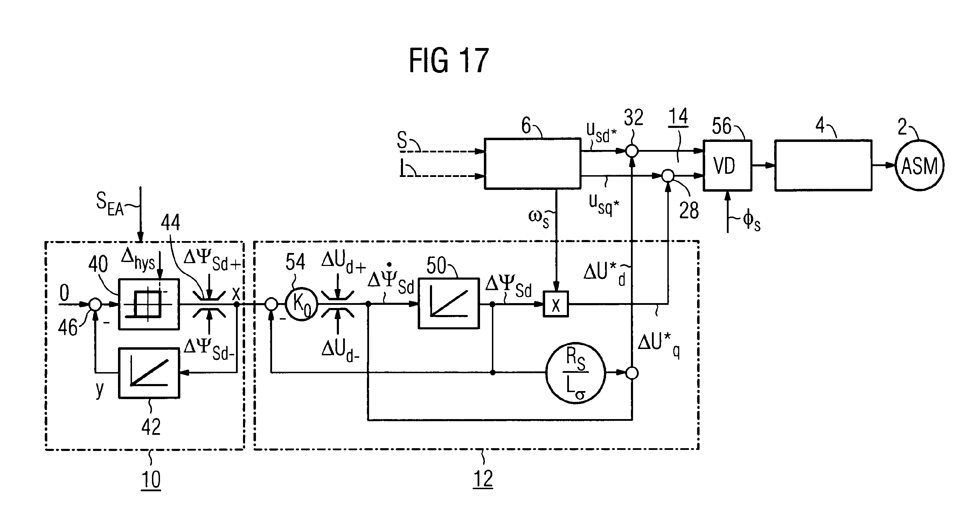

In der FIG 1 ist eine Grundstruktur der Vorrichtung zur Durchführung des erfindungsgemäßen Verfahrens zum Bremsen einer drehzahlgeregelten Asynchronmaschine 2, die von einem spannungseinprägenden Umrichter 4 gespeist wird, näher dargestellt. Der spannungseinprägende Umrichter 4 weist eine Regeleinrichtung 6 auf, die als U/f-Steuerung oder feldorientierte Regelung ausgeführt sein kann. Diese Regeleinrichtung 6 erhält als Eingangssignale die jeweils benötigten Soll- und Istwerte S und I. Am Ausgang dieser Regeleinrichtung 6 steht ein Spannungs-Sollzeiger $\underline{U}^*$ als Stellgröße des spannungseinprägenden Umrichters 4 bereit. Die erfindungsgemäße Vorrichtung 8 weist eine Signalquelle 10, ein Netzwerk 12 und eine Aufschalteinrichtung 14 auf, wobei am Eingang der Signalquelle 10 ein Betätigungssignal $S_{EA}$ und an dessen Ausgang ein Wechselsignal X anstehen. Der Ausgang dieser Signalquelle 10 ist mit einem Eingang des Netzwerkes 12 verknüpft, wobei an weiteren Eingängen dieses Netzwerkes 12 Regler- und Streckenparameter P anstehen und wobei das Netzwerk 12 ausgangsseitig mit einem Eingang der Aufschalteinrichtung 14 verknüpft ist. Ein zweiter Eingang der Aufschalteinrichtung 14 ist mit einem Stellerausgang der Regeleinrichtung 6 verknüpft. Ausgangsseitig ist diese Aufschalteinrichtung 14 mit einem Eingang eines Steuersatzes des spannungseinprägenden Umrichters 4 verbunden ist, wobei dieser Steuersatz nicht explizit dargestellt ist, sondern Bestandteil des spannungseinprägenden Umrichters 4 ist. Am Stellerausgang der Regeleinrichtung 6 steht ein Spannungs-Sollzeiger $\underline{U}^*$ an, wobei am Ausgang des Netzwerkes 12 ein Zusatzsignal $\Delta\underline{U}^*$ ansteht. Ausführungsform der Aufschalteinrichtung 14 sind in den Figuren 12 bis 15 näher dargestellt, wobei Ausführungsformen des Netzwerkes und der Signalquelle in den Figuren 16 und 17 näher veranschaulicht sind.

Eine Erkennung, ob die Aufschaltung des Zusatzsignals $\Delta\underline{U}^*$ notwendig ist, kann in Abhängigkeit vom Anstieg einer Zwischenkreisspannung $U_{zk}$ des spannungseinprägenden Umrichters 4, vom Eingriff eines Zwischenkreis-Spannungsreglers, der auch als $U_{dmax}$-Reglers bezeichnet wird, oder von einer Funktion von Drehzahl- bzw. Frequenz-Sollwert erfolgen. Eine Erkennung ist nicht in der FIG 1 explizit dargestellt. Im einfachsten Fall kann die Signalquelle 10 mittels des Betätigungssignals $S_{EA}$ eingeschaltet werden, wenn ein Frequenz-Sollwert betragsmäßig kleiner als ein ermittelter Istwert ist oder deren Vorzeichen unterschiedlich sind. Ansonsten liefert diese Signalquelle 10 und damit das Netzwerk 12 am Ausgang folgendes Zusatzsignal $\Delta\underline{U}^* = 0$.

Für ein effizientes Bremsen ist das Zusatzsignal $\Delta\underline{U}^*$ geeignet vorzugeben. Ziel des erfindungsgemäßen Verfahrens muss es also sein, mit Hilfe des Zusatzsignals $\Delta\underline{U}^*$ die Motorverluste zu maximieren, dabei den Ständerstrombetrag in einstellbaren Grenzen zu halten, kein Pendelmoment zu erzeugen und den durch die Regeleinrichtung 6 eingestellten Arbeitspunkt A der Asynchronmaschine 2 nicht zu verändern.

Soll keine Energie in ein speisendes Netz des spannungseinprägenden Umrichters 4 zurückgespeist werden, so muss die gesamte Energie, die in der Mechanik des Antriebs inklusive Arbeitsmaschine enthalten ist, in Verluste umgesetzt werden. Eine kurze Abbremszeit erhält man, wenn die Verluste hoch sind. Denkbar sind Verluste, die in der Mechanik selber erzeugt werden, Verluste, die im Umrichter 4 anfallen, und Verluste, die in der Asynchronmaschine 2 entstehen. Im Mittelpunkt stehen bei dem vorgestellten Verfahren Verluste, die in der Asynchronmaschine 2 entstehen und im Bremsfall maximiert werden.

Die Verlustarten in der Asynchronmaschine 2 können in Kupferverluste im Ständer, Kupferverluste im Läufer und Verluste im Ständer- und Läufereisen (Hysterese- und Wirbelstromverluste) unterteilt werden. Ziel des erfindungsgemäßen Verfahrens ist es, die Summe der drei Verlustarten zu maximieren.

Die Kupferverluste im Läufer der Asynchronmaschine 2 sind direkt abhängig vom im Läufer fließenden Strom. Ausgehend von den bekannten Maschinengleichungen ergibt sich aus der Differenz von Ständer- und Läuferfluss für den Läuferstrom:

$$\underline{i}_R = -\frac{\Psi_S}{L_\sigma} + \left(\frac{1}{L_\sigma} + \frac{1}{L_h}\right)\underline{\Psi}_R \qquad (1)$$

Für den Ständerstrom erhält man aus der Flussdifferenz:

$$\underline{i}_S = \frac{1}{L_\sigma}\{\underline{\Psi}_S - \Psi_R\} \qquad (2)$$

Dabei ist das allseits bekannte inverse $\Gamma$-Ersatzschaltbild der Asynchronmaschine 2, das in der FIG 2 näher dargestellt ist, zugrundegelegt. Selbstverständlich lassen sich die physikalischen Vorgänge in anderen Ersatzschaltbildern (T-Ersatzschaltbild, $\Gamma$-Ersatzschaltbild) darstellen.

Der Läuferfluss $\underline{\Psi}_R$ ist gewöhnlich eine sich langsam ändernde Größe, d.h., sie folgt einer von außen angelegten Änderung nur mit der Läuferzeitkonstante $\tau_R$ ($\tau_R$ = 50ms bis 2s). Wird nun ein Zusatzsignal $\Delta\underline{U}^*$ dem für den Betrieb vorhandenen Spannungs-Sollwert $\underline{U}^*$ überlagert, deren Frequenz viel größer als der Kehrwert der Läuferzeitkonstante $\tau_R$ ist, bleibt der Läuferfluss $\underline{\Psi}_R$ näherungsweise vom Zusatzsignal $\Delta\underline{U}^*$ unbeeinflusst. Das System verhält sich dann zudem näherungsweise linear (Ständerfrequenz $\omega_S$ nahezu konstant vorausgesetzt), d.h., die Gesamtwirkung der Summe der Eingangsgrößen ergibt sich aus der Summe der Einzelwirkungen.

Das Drehmoment m einer Asynchronmaschine 2 kann aus dem Vek torprodukt der Flüsse $\underline{\Psi}_S$ und $\underline{\Psi}_R$ gemäß folgender Gleichung:

$$m = \frac{2 \cdot p}{L_\sigma} \cdot \text{Im}\{\underline{\Psi}_S \cdot \Psi_R^*\} = \frac{2 \cdot P}{L_\sigma} \cdot |\underline{\Psi}_S| \cdot |\Psi_R| \cdot \sin\varphi \qquad (3)$$

berechnet werden. Das Symbol "*" am Läuferfluss $\underline{\Psi}_R$ weist darauf hin, dass es sich hier um eine konjugiert komplexe Größe handelt, p die Polpaarzahl und $\varphi$ der von den Flüssen $\underline{\Psi}_S$ und $\underline{\Psi}_R$ eingeschlossenen Winkel ist.

Zur Maximierung der Läuferverluste wird nun ein Zusatzsignal $\Delta\underline{U}^*$ so aufgeschaltet, dass im Läuferstrom $\Delta i_R$ ein nahezu rechteckiger Verlauf erreicht wird. Ober- und Untergrenze vom Strom $\Delta i_R$ richten sich nach der Stromtragfähigkeit des spannungseinprägenden Umrichters 4, der im allgemeinen durch einen maximalen Ständerstrombetrag $|i_S|_{max}$ gegeben ist. Entsprechend muss das Zusatzsignal $\Delta\underline{U}^*$ gestaltet werden.

Die Änderung des Ständerflusses $\underline{\Psi}_S$ bewirkt eine Änderung des Läuferstromes $\Delta i_R$. Nach Gleichung (1) wird bei einer Änderung des Ständerflusses $\Delta\underline{\Psi}_S$ für den Läuferstrom $\Delta i_R$, wenn wie oben vorausgesetzt die Änderung des Läuferflusses $\Delta\underline{\Psi}_R \approx 0$ (Läuferwiderstand $R_R \approx 0$ angenommen) ist:

$$\Delta \underline{i}_R = \frac{-\Delta\underline{\Psi}_S}{L_\sigma} \qquad (4)$$

Die Änderung des Ständerflusses $\Delta\underline{\Psi}_S$ wird durch das Aufschalten des Zusatzsignals $\Delta\underline{U}^*$ erzeugt. Im mit $\omega_S$ routierenden Koordinatensystem gilt die Spannungsgleichung:

$$\underline{U}^* = R_S \cdot \underline{i}_S + j \cdot \omega_S \cdot \underline{\Psi}_S + \dot{\underline{\Psi}}_S \qquad (5)$$

Für die in Frage kommenden Frequenzen des Zusatzsignals $\Delta\underline{U}^*$ kann auch in guter Näherung der Ständerwiderstand $R_S \approx 0$ gewählt werden. Damit vereinfacht sich die Gleichung (5) wie folgt:

$$\underline{U}^* = j \cdot \omega_S \cdot \underline{\Psi}_S + \dot{\underline{\Psi}}_S \qquad (6)$$

Bei dem oben vorausgesetzten linearen Verhalten gilt dann für die Abweichungen:

$$\Delta\underline{U}^* = j \cdot \omega_S \cdot \Delta\underline{\Psi}_S + \dot{\underline{\Psi}}_S \qquad (7)$$

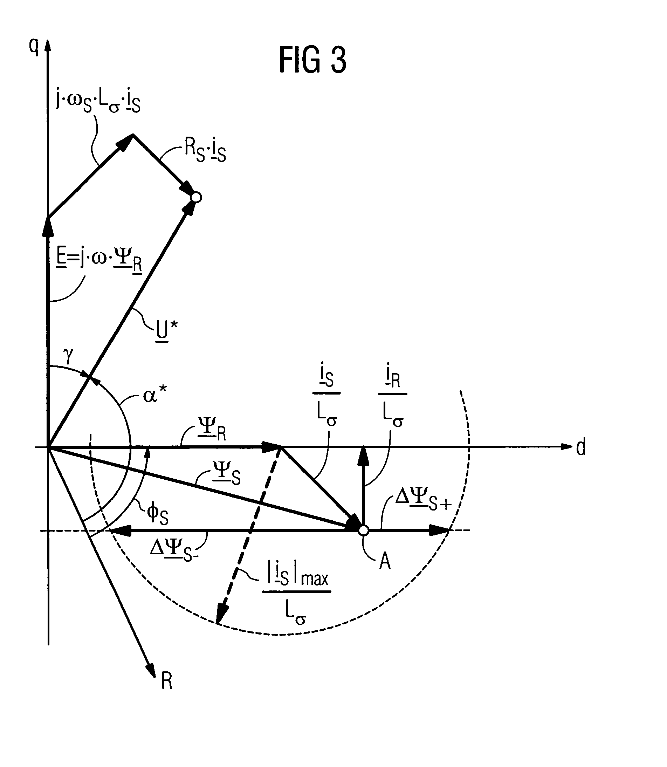

Da das Zusatzsignal $\Delta\underline{U}^*$ nach Möglichkeit kein Drehmoment m, d.h. $\Delta m = 0$, erzeugen soll, muss nach Gleichung (3) die Projektion $|\underline{\Psi}_S| \cdot \sin\varphi$ konstant bleiben, d.h., der Ständerfluss $\underline{\Psi}_S$ darf demzufolge nur parallel in Richtung des Läuferflusses $\underline{\Psi}_R$ verändert werden. D.h., die Änderung des Ständerflusses $\Delta\underline{\Psi}_S$ in der q-Achse des mit $\omega_S$ rotierenden Koordinatensystem soll Null bleiben (FIG 3). Im Sinne einer Maximierung der Läuferverluste sollte also der Ständerfluss $\underline{\Psi}_S$ einen oberen $\Delta\underline{\Psi}_{S+}$ oder einen unteren Maximalwert $\Delta\underline{\Psi}_{S-}$ annehmen, also einem Rechecksignal entsprechen. Damit ist gewährleistet, dass der Betrag $|\Delta i_R|$ des Läuferstromes $\Delta i_R$ und damit die Kupferverluste im Läufer möglichst groß werden. Der rechteckförmige Verlauf des Ständerflusses $\underline{\Psi}_S$ muss Mittelwert frei sein, um den durch den regulären Betrieb gegebenen Arbeitspunkt A nicht zu verschieben. Demnach darf das Integral vom Zusatzsignal $\Delta\underline{U}^*$ auch keinen Gleichanteil enthalten.

Wertet man Gleichung (7) nach Komponenten aus, so wird für die für die gewünschte Flussänderung $\Delta\underline{\Psi}_S$ erforderlichen Spannungskomponenten:

$$\Delta U_d^* = \Delta\dot{\Psi}_{Sd} \qquad (8)$$

oder

$$\Delta\Psi_{Sd} = \sqrt{\Delta U_d^*} \cdot dt \qquad (9)$$

$$\Delta U_q^* = \omega_S \cdot \Delta \Psi_{Sd} \qquad\qquad\qquad (10)$$

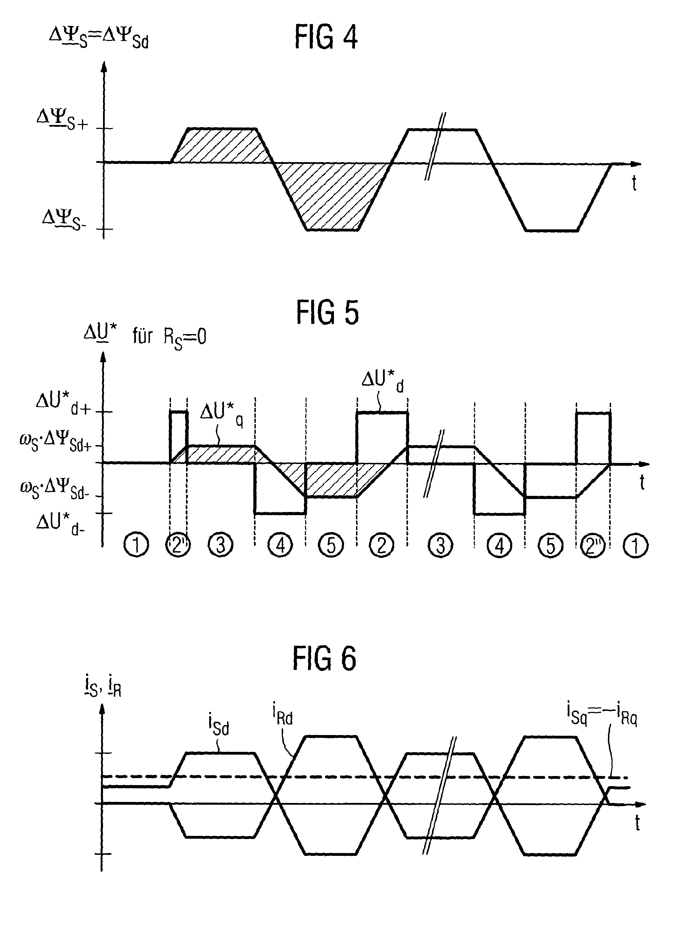

Da nach Gleichung (7) der Ständerfluss $\Delta\underline{\Psi}_S$ aus dem Integral des Zusatzsignals $\Delta\underline{U}^*$ hervorgeht, ist es nicht möglich, die für einen gewünschten ideal rechteckförmigen Verlauf notwendigen unendlich schnelle Änderung des Flusses zu erwirken. Die maximale Änderungsgeschwindigkeit vom Ständerfluss $\Delta\underline{\Psi}_S$ an den Flanken richtet sich nach der zur Verfügung stehenden Zusatzsignal $\Delta\underline{U}^*$. Nach Gleichung (4) und (7) wird die Spannungszeitfläche des Zusatzsignals $\Delta\underline{U}^*$ so gewählt, dass sich die gewünschte Änderung des Läuferstromes $\Delta i_R$ ergibt und der Ständerstrom $i_S$ die Grenzwerte nicht überschreitet, die beispielsweise durch die maximal zulässige Stromrichterbelastung gegeben sind. Wegen der notwendigen Mittelwertfreiheit des Integrals vom Zusatzsignal $\Delta\underline{U}^*$ müssen demnach die Spannungszeitflächen mit positiven und negativen Vorzeichen gleich groß sein (FIG 5). Günstigerweise wird das Zusatzsignal $\Delta\underline{U}^*$ beim Hinzu- bzw. beim Wegschalten so geformt, dass der Ständerfluss $\Delta\underline{\Psi}_S$ über einen Gesamtzeitraum betrachtet mittelwertfrei ist. Mit der Änderung der d-Komponente $\Delta\Psi_{sd}$ des Ständerflusses $\Delta\underline{\Psi}_S$ mit der Spannungszeitfläche $\int\Delta U_d^*\cdot dt$ nach Gleichung (9) ist eine Spannungskomponente $\Delta U_q^*$ erforderlich, die gemäß Gleichung (10) berechnet wird.

Selbstverständlich können für einen oberen Maximalwert der d-Komponente $\Delta U_{d+}^*$ und einen unteren Maximalwert $\Delta U_{d-}^*$ des Zusatzsignals $\Delta\underline{U}^*$ abweichend von den in der FIG 5 gezeigten gleichgroßen, zeitlich konstanten Werten auch unterschiedliche, sich zeitlich ändernde Größen gewählt werden. Die Grenzen können beispielsweise aus der maximalen möglichen Spannung des Umrichters 4 abgeleitet sein und ist für eine möglichst schnelle Änderung des Ständerflusses $\Delta\underline{\Psi}_S$ sinnvoll, was bezüglich der Verlustmaximierung angestrebt werden sollte.

Die in den Figuren 4 bis 6 gezeigten zeitlichen Verläufen sollen lediglich die prinzipiellen Zusammenhänge darstellen, wobei in der FIG 4 der Zeitverlauf für den Wechselanteil des Ständerflusses $\Delta\underline{\Psi}_S$, wobei in der FIG 5 die ortogonalen Komponenten $\Delta U_d^*$ und $\Delta U_q^*$ eines mit $\omega_S$ umlaufenden Koordinatensystem des Zusatzsignals $\Delta\underline{U}^*$ und wobei in der FIG 6 die zeitlichen Verläufe der ortogonalen Komponenten $i_{Sd}$, $i_{Sq}$ und $i_{Rd}$, $i_{Rq}$ in $\omega_S$ umlaufenden Koordinatensystem des Ständerstroms $i_S$ und des Läuferstroms $i_R$ veranschaulicht sind. Diese Darstellungen gelten für die Annahme, dass der Ständerwiderstand $R_S$ annähernd Null ist.

Durch zusätzliche Addition des Spannungsabfalls $R_S\cdot\Delta i_S$ zu den für eine Änderung des Ständerflusses $\Delta\underline{\Psi}_S$ erforderlichen Spannungskomponenten $\Delta\underline{U}^*\Delta U_d^* + j\cdot\Delta U_q^*$ kann der Ständerwiderstand $R_S$ berücksichtigt werden, was in den Figuren 4 bis 6 der Übersichtlichkeit halber nicht gemacht wurde.

Durch die gezeigte Wahl der Flussänderung des Ständerflusses $\Delta\underline{\Psi}_S$ ist gewährleistet, dass die Kupferverluste im Läufer und im Ständer maximiert sind, da die Ströme im Läufer und Ständer entsprechend vorgegebenen Grenzen maximal werden. Lediglich durch die nicht beliebig steilen Flanken der Ständerflussänderung $\Delta\underline{\Psi}_S$ entstehen Zeitbereiche, in denen der Strom nicht maximal ist. Diese Zeitbereiche sind prozentual gesehen größer, je höher die Frequenz ist. Mit steigender Frequenz würden also die Kupferverluste sinken. Andererseits entstehen bei hoher Frequenz mehr Hysterese- und Wirbelstromverluste im Ständer und Läufer. Günstigerweise wählt man die Frequenz des Zusatzsignals $\Delta\underline{U}^*$ so, dass die Gesamtverluste maximal werden.

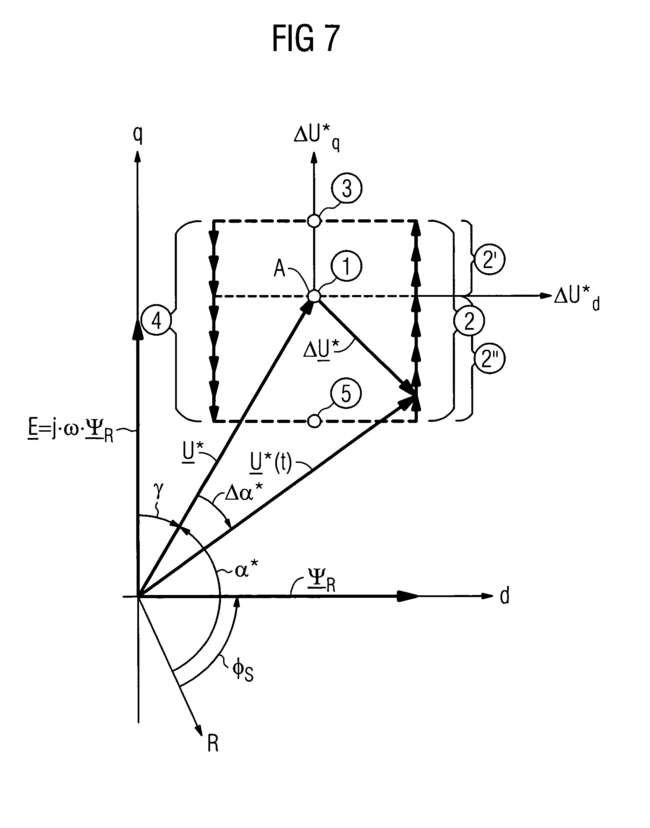

Aus den in der FIG 5 dargestellten Zeitverläufen der Komponenten $\Delta U_d^*$, und $\Delta U_q^*$ des Zusatzsignals $\Delta\underline{U}^*$ kann die Ortskurve dieses Zusatzsignals $\Delta\underline{U}^*$ im feldorientierten Koordinatensystem und daraus der modulierte Spannungs-Sollzeiger $\underline{U}^*(t) = \underline{U}^* + \Delta\underline{U}^*$ dargestellt werden (FIG 7). Vorausgesetzt wird wieder, dass der Ständerwiderstand $R_S$ annähernd Null ist. Dabei stellt sich der Zeitbereich ① in der FIG 7 als stationärer Betriebspunkt A dar, im Zeitabschnitt ② erfolgt der Flussaufbau. Er wird nach FIG 5 in einer gewissen Zeit durchschritten. Der Zeitabschnitt ③ sowie der Zeitabschnitt ⑤ sind als Punkte zu erkennen. Hier wird der Statorfluss $\underline{\Psi}_S$ über eine gewisse Zeit konstant gehalten. Im Zeitabschnitt ④ erfolgt der Flussabbau. Er dauert nach FIG 5 wiederum eine gewisse Zeit. Daraus kann durch Addition des Spannungs-Sollzeigers $\underline{U}^*$ und des Zusatzsignals $\Delta\underline{U}^*$ abgeleitet werden, wie sich der Gesamtspannungszeiger $\underline{U}^*(t)$ in Komponenten bzw. nach Betrag und Phase im Zeitverhalten darstellt. Sinngemäß kann diese Zusatzaufschaltung auf jeder Maschinensteuerung bzw. Regelung in jeden beliebigen Bezugssystem erfolgen, die mit einer Spannungs-Sollwertvorgabe arbeiten.

Wird der Ständerwiderstand $R_S$ berücksichtigt (Läuferwiderstand $R_R \approx 0$), so durchläuft der Gesamtspannungszeiger $\underline{U}^*(t)$ nicht ein Rechteck, sondern ein Parallelogramm. Durch die Berücksichtigung des Ständerwiderstandes $R_S$ verläuft nun die Ortskurve des Zusatzsignals $\Delta\underline{U}^*$ im Zeitbereich ② auf einer nach rechts geneigten Geraden. Sinngemäß gilt dies auch für den Zeitbereich ④. Die geschlossene Trajektorie des Gesamtspannungszeigers $\underline{U}^*(t)$ weist demnach die Form eines Parallelogramms auf.

Der Läuferwiderstand $R_R$ liegt bei der üblichen Auslegung einer Norm-Asynchronmaschine in der gleichen Größenordnung wie der Ständerwiderstand $R_S$. Im allgemeinen sind die Widerstände $R_S$ und $R_R$ bei kleinen Motoren größer als bei großen Maschinen. Sollen beide Widerstände $R_S$ und $R_R$ berücksichtigt werden, so wird anstelle des Ständerwiderstandes $R_S$ durch den Gesamtwiderstand $R_S + R_R$ ersetzt.

Sind die läuferflussorientierten Koordinaten d und q eines mit $\omega_S$ rotierenden Koordinatensystem durch die Regelung gegeben, z.B. durch ein läuferflussorientiertes Regelverfahren, kann die Berechnung des Gesamt-Sollspannungszeigers $\Delta \underline{U}^*(t)$ durch komponentenweise Addition des Zusatzsignals $\Delta \underline{U}^*$ auf die reguläre Betriebsgröße $\underline{U}^*$ im läuferflussorientierten Koordinatensystem erfolgen.

Ist das läuferflussorientierte Koordinatensystem nicht gegeben, z. B. bei einer U/f-Steuerung, sollte dennoch aus den oben aufgeführten Gründen der Ständerfluss $\underline{\Psi}_S$ durch das Zusatzsignal $\Delta \underline{U}^*$ nur in Richtung des Läuferflusses $\underline{\Psi}_R$ moduliert werden. Oft ist der Spannungs-Sollzeiger $\underline{U}^*$ nach Betrag und Phase gegeben. Eine Modulation in Richtung des Läuferflusses $\underline{\Psi}_R$ lässt sich dann erreichen, wenn der Winkel $\gamma$ bekannt ist (FIG 7). Im allgemeinen ist der Winkel $\gamma$ eine Funktion von der Ständer-Wirkleistung $P_S$, der Frequenz f und den Maschinenparametern $R_S$ und $L_h$.

Wird zunächst vorausgesetzt, dass für den Bremsvorgang die an den Ständerklemmen ausgetauschte Ständerwirkleistung $P_S = 0$ ist, so kann nach einer längeren Rechnung der einfache Zusammenhang nach folgender Gleichung:

$$\gamma = \frac{1}{2}\arcsin\left\{\frac{2 \cdot R_s}{\omega_s \cdot L_h}\right\} \qquad (11)$$

gefunden werden, wenn der Ständerwiderstand $R_S$ berücksichtigt wird und $\omega_S$ die speisende Grundfrequenz ist (Eisenverluste vernachlässigt).

Gewöhnlich entstehen Eisenverluste in der Maschine und Umrichterverluste. Diese können zurückgespeist werden, ohne dass es zur Überladung des Spannungszwischenkreises des spannungseinprägenden Umrichters 4 kommt, da diese Verluste entweder im Umrichter 4 oder in der Maschine 2 in Wärme umgesetzt und nicht in das Netz zurückgespeist werden müssen. Fasst man diese Verluste zu einer angenommenen bekannten Wirkleistung $P_S$ zusammen (negativer Wert), so lässt sich der Winkel $\gamma$ wiederum mit Hilfe der analytischen Formel rechnen:

$$\gamma = \beta + \delta \qquad (12)$$

mit:

$$\beta = \arcsin\left\{\frac{\operatorname{sgn}(P_s)}{\left|\underline{U}^*\right|}\sqrt{P_s \cdot \left[R_s - \frac{1}{2}\omega_s \cdot L_h \cdot \sqrt{1-L^2}\right]}\right\} \qquad (13$$

und

$$\delta = \frac{1}{2}\arccos(L) \qquad (14)$$

und den Abkürzungen:

$$L = -\frac{1}{c^2 + d^2}\left(b \cdot c + d \cdot \sqrt{c^2 + d^2 - b^2}\right) \qquad (15)$$

$$c = \omega_S \cdot L_h \left(\omega_S \cdot L_\sigma + \frac{1}{2}\omega_S \cdot L_h\right) \cdot P_S \qquad (16)$$

$$b = c + (\omega_S \cdot L_\sigma)^2 \cdot P_S + R_S \cdot \left(R_S \cdot P_S - \left|\underline{U}^*\right|^2\right) \qquad (17)$$

$$d = \left[ R_s \cdot P_s - \frac{\left| \underline{U}^* \right|^2}{2} \right] \cdot \omega_s \cdot L_h \qquad (18)$$

Für $P_S = 0$ geht die Gleichung (12) in Gleichung (11) über.

Der "läuferflussorientierte" Winkel $\Phi_S$ lässt sich gemäß FIG 7 dann folgendermaßen berechnen:

$$\phi_S = \alpha^* + \gamma - \frac{\pi}{2} \qquad (19)$$

Damit lässt sich sofort für den feldorientierten Betrieb als auch für einen beliebig gearteten anderen Betrieb, beispielsweise dem U/f-Betrieb, erreichen, dass das Verfahren alleine durch eine Zusatzaufschaltung von einem Zusatzsignal $\Delta\underline{U}^*$, insbesondere einer Zusatzspannung, auf einen Spannungs-Sollzeiger $\underline{U}^*$ die Verluste und damit die Bremswirkung maximiert wird, wobei keine prinzipbedingten Pendelmomente erzeugt werden.

Für die Umsetzung der gezeigten prinzipiellen Zusammenhänge und der Grundstruktur nach FIG 1 in verschiedene Ausprägungen gibt es viele Möglichkeiten. Es soll nun in einer detaillierten Ausführung die Aufschaltung eines Zusatzsignals $\Delta\underline{U}^*$ auf Betrag und Phase eines Spannungs-Sollzeigers $\underline{U}^*$ beschrieben werden.

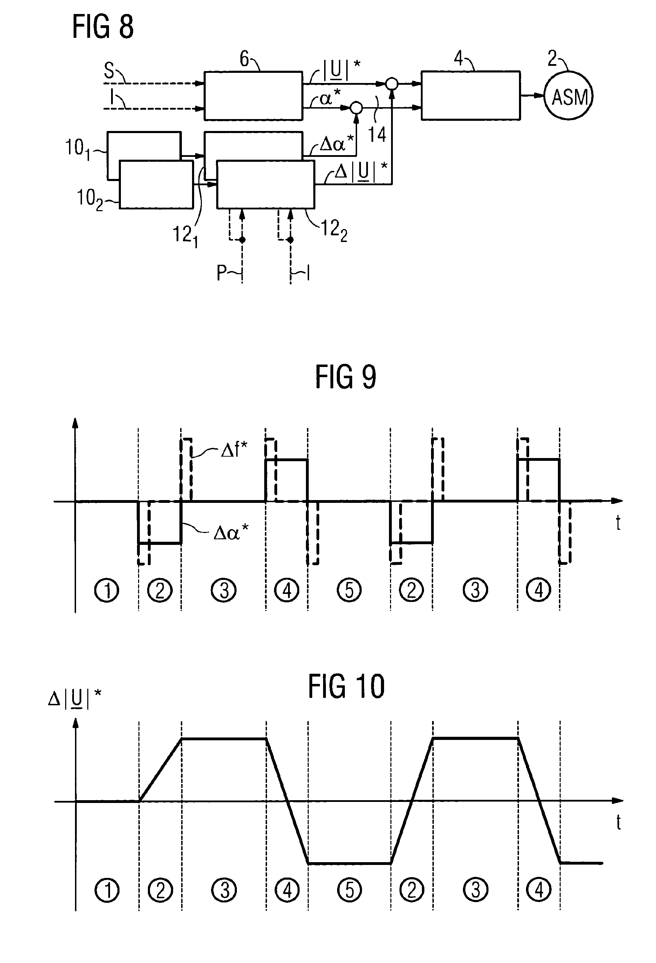

In der FIG 8 ist die Grundstruktur bei einer Aufschaltung des Zusatzsignals $\Delta\underline{U}^*$, wenn der Spannungs-Sollzeiger $\underline{U}^*$ nach Betrag $|\underline{U}|^*$ und Winkel $\alpha^*$ vorliegt. Dabei werden ein Zusatzsignal $\Delta\alpha^*$ auf den Winkelwert $\alpha^*$ und ein Zusatzsignal $\Delta|\underline{U}|^*$ auf den Betragswert $|\underline{U}|^*$ aufgeschaltet, die aus zwei nicht notwendigerweise getrennten Netzwerken $12_1$ und $12_2$ und zwei Signalquellen $10_1$ und $10_2$ stammen. Die Verläufe für die Zusatzsignale $\Delta\alpha^*$ und $\Delta|\underline{U}|^*$ lassen sich leicht aus den Signalverläufen der Figuren 9 und 10 ablesen. Gleiche Zeitabschnitte sind mit gleichen Nummern versehen. Die FIG 9 zeigt einen Signalverlauf für den Aufschaltwert $\Delta\alpha^*$. Zusätzlich in diesem Diagramm der FIG 9 ist ein entsprechender Aufschaltwert $\Delta f^*$ für einen Frequenzeingriff anstelle eines Winkeleingriffs angegeben. Hierbei führt die Integration vom Aufschaltwert $\Delta f^*$ zum Verlauf des Aufschaltwertes $\Delta\alpha^*$. In der FIG 10 ist der zugehörige zweiter Aufschaltwert $\Delta|\underline{U}|^*$ dargestellt. Diese Aufschaltwerte $\Delta|\underline{U}|^*$ und $\Delta\alpha^*$ führen zu einer Veränderung des Spannungs- und Strom-Raumzeigers in der in FIG 11 gezeigten Weise. Der Spannungs-Raumzeiger $\underline{U}^*$ und der Strom-Raumzeiger $\underline{I}$ sind in einem mit dem Spannungszeiger rotierenden Koordinatensystem dargestellt. In der FIG 11 wird vereinfacht von einer sich im Leerlauf befindlichen Asynchronmaschine 2 mit dem Ständerwiderstand $R_S = 0$ ausgegangen. Im Normalbetrieb ① liegen die Strom- und Spannungs-Raumzeiger $\underline{I}$ und $\underline{U}^*$ rechtwinklig zueinander. Zu Beginn von Abschnitt ② springt der Winkel $\alpha^*$ des Spannungs-Raumzeigers $\underline{U}^*$ und dieser erhält dadurch eine stromaufbauende Komponente in Blindrichtung. Dem Stromaufbau wird mittels einer linearen Erhöhung des Spannungsbetrages Rechnung getragen. Am Ende des Abschnitts ② springt der Winkel $\alpha^*$ wieder auf Null und Zustand ③ wird erreicht. Ein entsprechender Übergangsvorgang mittels Abschnitt ④ führt auf den Zustand ⑤. Dieser Vorgang kann nun während des gesamten Bremsvorgangs wiederholt werden, wobei der Betriebspunkt ① erst zum Ende des Bremsvorgangs wieder angefahren wird.

Mit dem Verhältnis der Zeiten von Abschnitt ② und Abschnitt ④ kann erreicht werden, dass kapazitiver und induktiver Blindstrom gleich groß sind und somit der Umrichter 4 für eine optimale Bremswirkung stets gut ausgenutzt wird. Mit einer geeigneten, frequenzabhängigen Wahl der Amplituden der Größen der Winkelaufschaltung $\Delta\alpha^*$ und der Betragsaufschaltung $\Delta|\underline{U}|^*$ kann dafür gesorgt werden, dass im gesamten Drehzahlbereich eine optimale Bremswirkung erreicht wird. Aus dem Zeigerdiagramm gemäß FIG 7 kann abgeleitet werden:

$$\Delta\alpha_+^* \approx \frac{\Delta U_{d+}^*}{|\underline{U}|^*} \text{ bzw. } \Delta\alpha_-^* \approx \frac{\Delta U_{d-}^*}{|\underline{U}|^*} \; ; \; |\underline{U}|^* \approx |\underline{\Psi}_S| \cdot \omega_S \qquad (20)$$

und

$$\Delta|\underline{U}|_+^* \approx \omega_S \cdot \Delta\Psi_{Sd+} \text{ bzw. } \Delta|\underline{U}|_-^* \approx \omega_S \cdot \Delta_{Sd-} \qquad (21)$$

Die Größen $\Delta\Psi_{Sd+}$ und $\Delta\Psi_{Sd-}$ können mit Gleichung (8) ermittelt werden.

Mittels der gezeigten Aufschaltungen ist es somit möglich, deutlich höhere ohmsche Motorverluste durch den erhöhten Strombetrag sowie zusätzliche Ummagnetisierungsverluste durch den Vorzeichenwechsel des Stromes zu erreichen.

Alternativ zu der gezeigten Ermittlung der Komponenten $\Delta\alpha^*$ und $\Delta|\underline{U}|^*$ des Zusatzsignals $\Delta\underline{U}^*$ nach Betrag $|\underline{U}|^*$ und Winkel $\alpha^*$ des Spannungs-Sollzeigers $\underline{U}^*$ ist auch eine komponentenweise Berechnung des Zusatzsignals $\Delta\underline{U}^*$ in einem zunächst beliebigen rechtwinkligen Koordinatensystem möglich. Vorteilhaft ist dabei ein Verlauf der Komponenten $\Delta U_d^*$ und $\Delta U_q^*$ des Zusatzsignale nach FIG 5. Gemäß FIG 1 bzw. FIG 8 wird ein Zusatzsignal $\Delta\underline{U}^*$ von der Signalquelle 10 bzw. $10_1$ und $10_2$ und einem Netzwerk 12 bzw. $12_1$ und $12_2$ erzeugt.

Bezüglich des Drehmoments- und Geräuschverhaltens hat es sich als vorteilhaft erwiesen, eine frequenzabhängige Drehung der Komponenten vorzunehmen. Dadurch wird, wie gezeigt, nur eine Modulation in Richtung des Läuferflusses $\underline{\Psi}_R$ erreicht, wodurch eine Modulation des Drehmoments m prinzipiell vermieden wird. Da im allgemeinen die Modulation in Richtung des Läuferflusses $\underline{\Psi}_R$ leiser ist als in die ortogonale "Momenten"-Richtung, erreicht man auch eine Geräuschminimierung.

Günstigerweise werden der Spannungs-Sollzeiger $\underline{U}^*$ und das Zusatzsignal $\Delta\underline{U}^*$ im mit $\alpha^*$ rotierendem Koordinatensystem addiert (FIG 12). In diesem Koordinatensystem hat der Spannungs-Sollzeiger $\underline{U}^*$ nur eine Komponente, nämlich den Betrag $|\underline{U}|^*$. Das Zusatzsignal $\Delta\underline{U}^*$ liegt zunächst im d,q-Koordinatensystem mit dem Winkel $\Phi_S$ vor. Am Ausgang des Netzwerkes 12 stehen die Komponenten $\Delta U_d^*$ und $\Delta U_q^*$ des Zusatzsignals $\Delta\underline{U}^*$ an. Für eine Addition zum Spannungs-Sollzeiger $\underline{U}^*$ wird das Zusatzsignal $\Delta\underline{U}^*$ mit Hilfe eines Vektordrehers 16 in das mit $\alpha^*$ rotierenden Koordinatensystem transformiert. Ein Winkeleingang dieses Vektordrehers 16 ist mit einem Ausgang einer Einrichtung 18 zur Generierung eines Spannungswinkels $\gamma$ verbunden. Dieser Einrichtung 18 sind einerseits ein Wert einer Wirkleistung $P_S$ und ein Wert einer Ständerfrequenz $\omega_S$ zugeführt. In Abhängigkeit dieser beiden Werte $P_S$ und $\omega_S$ berechnet diese Einrichtung 18 mit Hilfe der Gleichungen (11) bzw. (12) einen Spannungswinkel $\gamma$. Mittels diesem Winkel $\gamma$ werden die von der Signalquelle 10 und dem Netzwerk 12 bestimmten Komponenten $\Delta U_d^*$ und $\Delta U_q^*$ eines Zusatzsignals $\Delta\underline{U}^*$ in Komponenten eines Zusatzsignals $\Delta\underline{U}^*$ in einem mit $\alpha^*$ rotierenden Koordinatensystem transformiert. Ein erster Ausgang 20 des Vektordrehers 16 ist mit einem Eingang eines Addierers 22 verbunden, dessen anderer Eingang mit einem Ausgang der Regeleinrichtung 6, an dem ein Betragswert $|\underline{U}|^*$ ansteht, verknüpft ist. Diesem Addierer 22 ist ein Koordinatenwandler 24 nachgeschaltet, dessen zweiter Eingang mit einem zweiten Ausgang 26 des Vektordrehers 16 verbunden ist. Dieser Koordinatenwandler 24 transformiert die kathesischen Komponenten des Zusatzsignals $\Delta\underline{U}^*$ in polare Komponenten $|\underline{U}|^*$ (t) und $\Delta\alpha^*$. Die polare Komponente $|\underline{U}|^*$ (t) kann gemäß folgender Gleichung:

$$\underline{U}^*(t) = \left\{ \left|\underline{U}\right|^* + (\Delta U_d^* + j \cdot \Delta U_q^*) \cdot D(\gamma) \right\} \cdot e^{j \cdot \alpha^*} \qquad (22)$$

berechnet werden, wobei die Drehtransformation

$$D(\gamma) = e^{j \cdot (\gamma - \frac{\pi}{2})} \qquad (23)$$

ist.

Zur polaren Komponente $\Delta\alpha^*$ des transformierten Zusatzsignals $\Delta\underline{U}^*$ wird der Winkel $\alpha^*$ der Spannungs-Sollzeigers $\underline{U}^*$ der Regeleinrichtung 6 mittels eines weiteren Addierers 28 aufaddiert. Die polaren Komponenten des modulierten Spannungs-Sollzeigers $\underline{U}^*$(t) werden als Stellgröße einem Steuersatz des spannungseinprägenden Umrichters 4 zugeführt. Der Steuersatz ist hier nicht explizit dargestellt, sondern ist Bestandteil des Umrichters 4. Die Komponenten Vektordreher 16, Einrichtung 18 zur Generierung eines Spannungswinkels $\gamma$, Addierer 22, Koordinatenwandler 24 und ein weiterer Addierer 28 bilden die in der FIG 1 bzw. 8 bezeichnete Aufschalteinrichtung 14.

Diese in FIG 12 gezeigte Aufschalteinrichtung 14 kann so umgeformt werden, dass die erfindungsgemäße Vorrichtung 8 als rein additive Aufschaltung im Sollspannungszweig wirkt. Für die Umformung der Aufschaltung 14 nach FIG 12 wird ein Subtrahierer 30 und ein weiterer Addierer 32 verwendet. Der Subtrahierer 30 wird derart einem Betrags-Ausgang des Koordinantenwandlers 24 nachgeschaltet, dass sein erster Eingang mit diesem Betrags-Ausgang verknüpft ist. Sein zweiter Eingang ist mit einem Betrags-Ausgang des Stellerausgangs der Regeleinrichtung 6 verbunden. Am Ausgang dieses Subtrahierers 30 erhält man somit einen Betragswert des transformierten Zusatzsignals $\Delta\underline{U}^*$. Somit stehen an den beiden Ausgängen der umgeformten Aufschalteinrichtung 14 der Betrag und der Winkel des transformierten Zusatzsignals $\Delta\underline{U}^*$ an. Die Aufschaltung erfolgt somit nach Betrag und Winkel und kann vorzugsweise dann eingesetzt werden, wenn der Spannungs-Sollzeiger $\underline{U}^*$ der Regeleinrichtung 6 nur nach Betrag $|\underline{U}|^*$ und Winkel $\alpha^*$ vorliegt. Vorteilhaft bei dieser Aufschaltung 14 ist, dass für eine Implementierung im Sollspannungszweig nur minimale Eingriffe erforderlich sind.

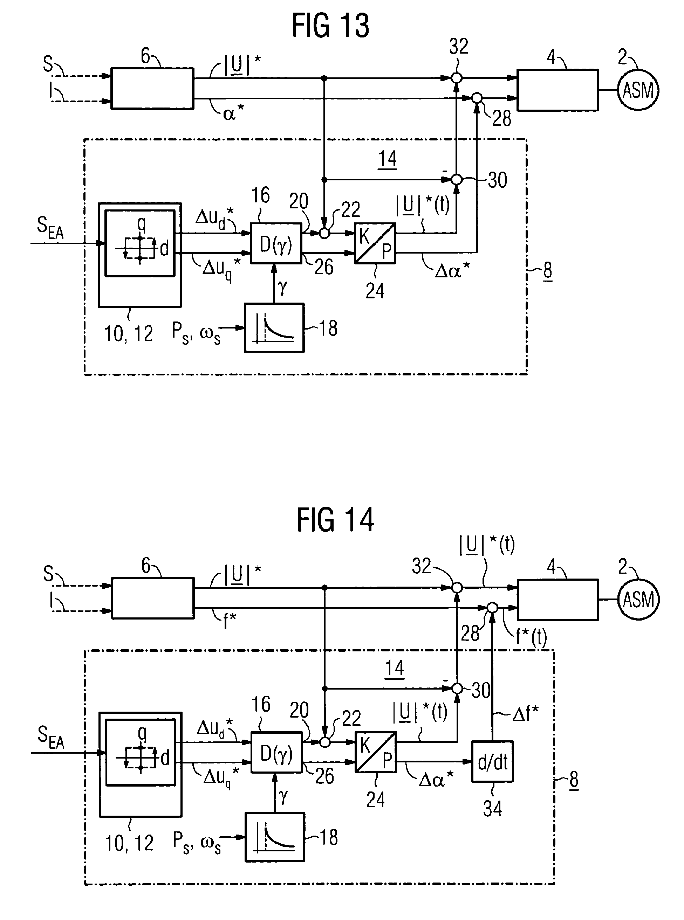

Der Spannungs-Sollzeiger $\underline{U}^*$ liegt oft nur nach Betrag $|\underline{U}|^*$ und Frequenz f* vor. Beispielsweise ist dies häufig bei U/f-Steuerungen der Fall. Damit auch das Zusatzsignal $\Delta\underline{U}^*$ additiv dieser Stellgröße aufgeschaltet werden kann, wird die Aufschalteinrichtung 14 nach FIG 13 modifiziert. Eine derartig modifizierte Aufschalteinrichtung 14 ist in der FIG 14 näher dargestellt. Diese modifizierte Aufschalteinrichtung 14 unterscheidet sich von der Aufschalteinrichtung 14 nach FIG 13 dadurch, dass zwischen dem Eingang des weiteren Addierers 28 und dem polaren Ausgang "Winkel" eine Differentationseinrichtung 34 geschaltet ist. Durch Differentation des Winkels $\Delta\alpha^*$ des Zusatzsignals $\Delta\underline{U}^*$ erhält man eine Zusatzfrequenz $\Delta f^*$. Der weitere Addierer 28 addiert in dieser modifizierten Aufschalteinrichtung 14 nun Frequenzwerte und keine Winkelwerte mehr. Als Ergebnis erhält man den Frequenzwert $f^*(t)$ des modifizierten Spannungs-Sollzeigers $\underline{U}^*(t)$.

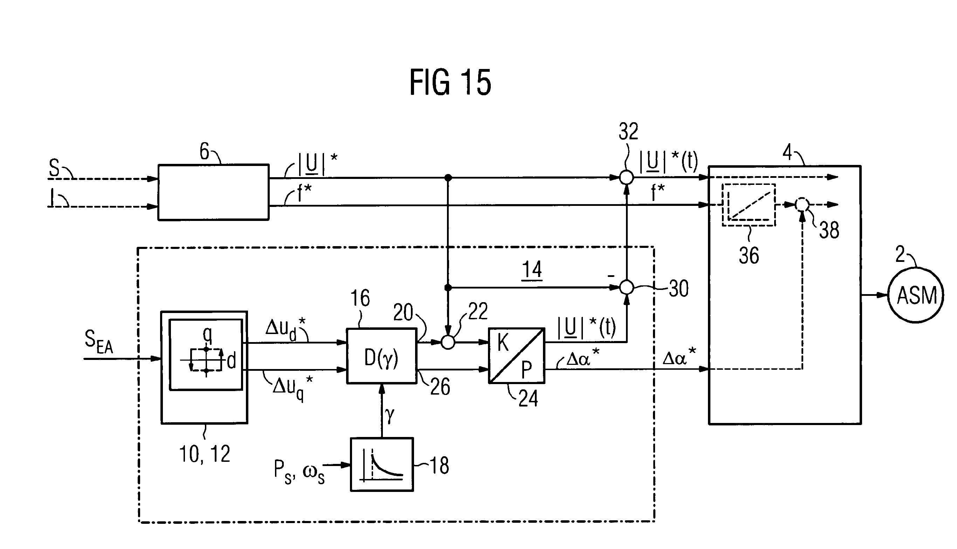

Oft arbeiten Steuersätze so, dass es einen Frequenz- und einen Winkeleingang gibt. Hierbei wird oft Winkel $\alpha^*$ des Spannungs-Sollzeigers $\underline{U}^*$ aus der Summe von Winkeleingang und Integration der Sollfrequenz $f^*$ gebildet. Zur Auswahl des Steuersatzzustandes (etwa Auswahl des Modulationsverfahrens oder der Pulsmuster) dient der im allgemeinen ruhige Verlauf der Sollfrequenz f*, die aus einer Sollwertvorgabe kommen könnte. Es könnte aber auch die Frequenz des Läuferflusses $\underline{\Psi}_R$ verwendet werden. In der FIG 15 ist eine entsprechend modifizierte Aufschalteinrichtung 14 näher dargestellt. Diese modifizierte Aufschalteinrichtung 14 unterscheidet sich von der Aufschalteinrichtung 14 gemäß FIG 13 dadurch, dass der weitere Addierer 28 nicht mehr benötigt wird. Der hier dargestellte Steuersatz innerhalb des Umrichters 4 weist nun drei Eingänge auf, nämlich einen Betrags-, einen Frequenz- und einen Winkeleingang. Am Ausgang der Regeleinrichtung 6 steht die Stellgröße nur nach Betrag $|\underline{U}|^*$ und Frequenz $f^*$ an. Die Frequenzkomponente $f^*$ wird direkt dem Frequenzeingang des Steuersatzes zugeführt. Der Ausgang des weiteren Addierers 32 wird mit dem Betragseingang des Steuersatzes verknüpft. Der Winkelsausgang des Koordinatenwandlers 24 wird direkt mit dem Winkeleingang des Steuersatzes verknüpft. Im Steuersatz wird mittels eines Integrierers 36 und eines nachgeschalteten Addierers 38 die Frequenzkomponente $f^*$ des Spannungs-Sollzeigers $\underline{U}^*$ und die Winkelkomponente $\Delta\alpha^*$ des Zusatzsignals $\Delta\underline{U}^*$ miteinander verknüpft.

Die in den Figuren 12 bis 15 enthaltenen Blöcke Signalquelle 10 und Netzwerk 12 haben die Aufgabe ein Zusatzsignal $\Delta\underline{U}^*$ zugenerieren, deren Komponenten $\Delta\underline{U}_d^*$ und $\Delta\underline{U}_q^*$ entsprechend den in der FIG 5 gezeigten Verläufe aufweist. Diese Signale $\Delta U_d^*$ und $\Delta U_q^*$ können auf vielfältige Weise erzeugt werden.

In der FIG 16 ist eine mögliche Ausführungsform einer Signalquelle 10 und eines Netzwerkes 12 näher veranschaulicht.

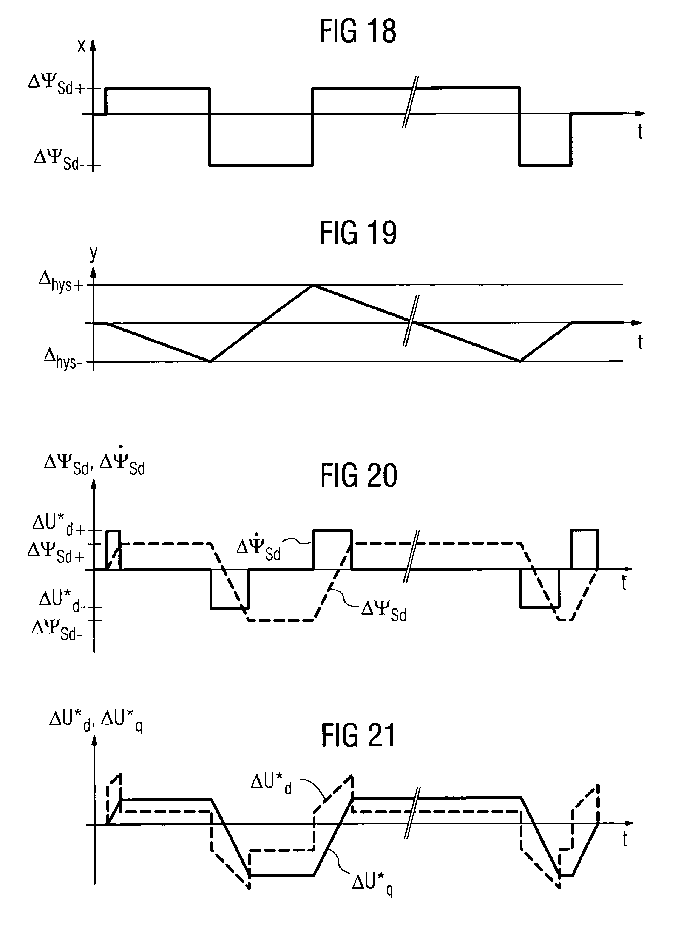

Die Signalquelle 10 weist einen Hystereseregler 40, einen Integrierer 42, einen Begrenzer 44 und einen Vergleicher 46 auf. Eingangsseitig ist der Vergleicher 46 angeordnet, dessen Ausgang mit einem Eingang des Hysteresereglers 40, der auch als Zweipunktregler bezeichnet wird, verbunden ist. Ausgangsseitig ist dieser Hystereseregler 40 mit dem Begrenzer 44 verknüpft, dessen begrenztes Ausgangssignal X dem Integrierer 42 zugeführt wird. Ausgangsseitig ist der Integrierer 42 mit einem invertierenden Eingang des Vergleichers 46 verbunden, an dessen nicht invertierenden Eingang ein Null-Signal ansteht. Mittels des Signals $\Delta_{hys}$ des Hysteresereglers 40 lässt sich die Frequenz des Ausgangssignals X der Signalquelle 10 einstellen. Mit Hilfe des Begrenzers 44 wird das Ausgangssignal X der Signalquelle 10 auf einen oberen Maximalwert $\Delta\Psi_{sd+}$ und einem unteren Maximalwert $\Delta\Psi_{sd-}$ begrenzt. Durch diese Grenzwerte wird dafür gesorgt, dass der Umrichter 4 nicht überlastet wird. Die Ausgangsbegrenzungen der Signalquelle 10 können selbstverständlich adaptiv, beispielsweise in Abhängigkeit eines momentenbildenden Stromes gestaltet werden. Zum Starten der Signalquelle 10 kann das Ausgangssignal Y des Integrierers 42 bei Null beginnend gestartet werden. Zum Stoppen der Signalquelle 10 kann der anstehende Ein-/Ausbefehl $S_{EA}$ mit dem Nulldurchgang des Ausgangssignals Y des Integrierers 42 verknüpft werden. Damit wird das Ausgangssignal Y des Integrierers 42 bis Null integriert, so dass das Gesamtintegral über dem Ausgangssignal X der Signalquelle 10 den Wert Null aufweist. Somit erfüllt die Signalquelle 10 alle Anforderungen der Mittelwertfreiheit zur Wahrung des stationären Arbeitspunktes A. Die Signale X und Y der Signalquelle 10 sind jeweils in einem Diagramm Zeit t in den Figuren 18 und 19 näher veranschaulicht.

Das Netzwerk 12 wiederum dient zur Berechnung geeigneter Spannungskomponenten $\Delta U_d^*$ und $\Delta U_q^*$ eines Zusatzsignals $\Delta\underline{U}^*$, die zur Erhöhung der Kupfer- und Eisenverluste in der Asynchronmaschine 2 führen. Dieses Netzwerk 12 enthält im allgemeinen Integratoren 48 und 50 und Faktoren 52 und 54, mit deren Hilfe diese Spannungskomponenten $\Delta U_d^*$ und $\Delta U_q^*$ eines Zusatzsignals $\Delta\underline{U}^*$ bestimmt werden. In der dargestellten Ausführungsform des Netzwerks 12 wird mit Hilfe einer Anstiegsbegrenzung, die aus rückgeführten und begrenzten Integrator 50 mit einer Kreisverstärkung $K_0$ gebildet ist, aus dem AusgangsSignal X der Signalquelle 10 ein anstiegsbegrenztes Signal $\Delta\Psi_{Sd}$ ge-

formt, wobei dessen Ableitung $\Delta\dot{\Psi}_{Sd}$ ebenso zur Verfügung steht. Die Kreisverstärkung $K_0$ wird so groß gewählt, dass der rückgeführte Integrator 50 der Anstiegsbegrenzung noch stabil arbeitet. Die Begrenzungen $\Delta U_{d+}$ und $\Delta U_{d-}$ und $\Delta\dot{U}_{dmax}^{*}$ können wiederum adaptiv, beispielsweise abhängig von der gerade zur Verfügung stehenden Spannungsreserve bzw. der maximal zulässigen Frequenzänderung, gestaltet werden.

Wenn der Ständerwiderstand $R_S$ berücksichtigt wird, so muss das Netzwerk 12 dann mit den erzeugten Größen $\Delta\dot{\Psi}_{Sd}$ und $\Delta\Psi_{Sd}$ die Spannungskomponenten gemäß der Gleichung:

$$\Delta U_d^{*} = \Delta\dot{\Psi}_{Sd} + \frac{R_S}{L_\sigma}\cdot\Delta\Psi_{Sd} \tag{24}$$

und

$$\Delta U_q^{*} = \omega_S\cdot\Delta\Psi_{Sd} \tag{25}$$

bilden. Die Frequenz $\omega_s$ ist im allgemeinen in der Regeleinrichtung 6 bekannt und kann für die Berechnung der Komponente $\Delta U_q^{*}$ des Zusatzsignals $\Delta\underline{U}^{*}$ verwendet werden. Das anstiegsbegrenzte Signal $\Delta\Psi_{Sd}$ und dessen Ableitung $\Delta\dot{\Psi}_{Sd}$ sowie die Komponenten $\Delta U_d^{*}$ und $\Delta U_q^{*}$ des Zusatzsignals $\Delta\underline{U}^{*}$ sind jeweils in einem Diagramm Zeit t in den Figuren 20 und 21 näher dargestellt.

Liegen innerhalb der Regelungseinrichtung 6 Winkelinformationen über Flussgrößen beispielsweise dem Rotorfluss $\Psi_R$ oder über die EMK (Elektromotorische Kraft) vor, so kann in einem weiteren Ausführungsbeispiel gemäß FIG 17 auch eine komponentenweise Aufschaltung der Komponenten $\Delta U_d^{*}$ und $\Delta U_q^{*}$ des Zusatzsignals $\Delta\underline{U}^{*}$ erfolgen. In der Ausführungsform gemäß FIG 17 liefert die Regeleinrichtung 6 Spannungskomponente $u_{sd}^{*}$ und $u_{sq}^{*}$ in Rotorflussrichtung und quer dazu eines Spannungs-Sollzeigers $\underline{U}^{*}$. Die Regeleinrichtung 6 liefert außerdem an das Netzwerk 12 die Frequenz $\omega_S$. Die Aufschalteinrichtung 14 in dieser Ausführungsform weist nur noch zwei Addierer 28 und 32 auf. Der Vektordreher 56 ist Bestandteil der Regeleinrichtung 6, die auch den für die Transformation notwendigen Flusswinkel $\phi_S$ berechnet und der ohne der erfindungsgemäßen Einrichtung ebenso erforderlich und vorhanden wäre.

Damit lässt sich für einen feldorientierten Betrieb erreichen, dass durch eine Zusatzaufschaltung von einem Zusatzsignal $\Delta\underline{U}^{*}$ die Verluste und damit die Bremswirkung maximiert wird, wobei keine prinzipbedingten Pendelmomente erzeugt werden.

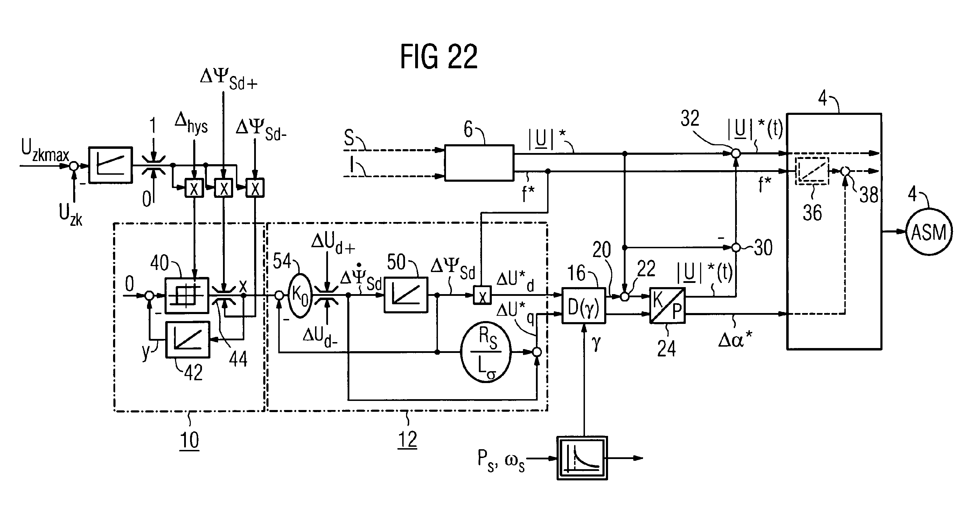

Eine Erkennung, ob die Aufschaltung eines Zusatzsignals $\Delta\underline{U}^{*}$ zur Erhöhung der Motorverluste notwendig ist, kann wie schon bereits ausgeführt beispielsweise abhängig von einer Zwischenkreisspannung $U_{zk}$ erfolgen. Im einfachsten Fall kann der Ein-/Ausbefehl $S_{EA}$ gesetzt werden, wenn die Zwischenkreisspannung $U_{zk}$ größer als ein vorbestimmter Maximalwert $U_{zkmax}$ der Zwischenspannung $U_{zk}$ ist und sonst rückgesetzt werden (FIG 22). Eine weitere Ausführungsform ist denkbar, wenn die Größen $\Delta\Psi_{Sd+}$, $\Delta\Psi_{Sd-}$ und $\Delta_{hys}$ mit Hilfe einer Kennlinie oder durch Multiplikation von Null bis zu ihrem Nominalwert verändert werden (FIG 22). Hierbei wird die Bremswirkung des Verfahrens nicht plötzlich, sondern über ein Zeitverhalten entfaltet. Vorteilhaft ist bei dieser Lösung, dass Stabilitätsprobleme vermieden werden können. Ändert man $\Delta\Psi_{Sd+}$, $\Delta\Psi_{Sd-}$ und $\Delta_{hys}$ mit dem gleichen Faktor, so bleibt die Frequenz der Signalquelle 10 erhalten.

Dieses vorgestellte erfindungsgemäße Verfahren zum schnellen Bremsen durch Verlustmaximierung in einer umrichtergespeisten Asynchronmaschine 2 weist gegenüber den eingangs genannten bekannten Verfahren folgende wesentliche Vorteile auf:

- Es ist effizienter als die bisher bekannten Verfahren.
- Der durch die Steuerung/Regelung gegebene Betriebspunkt A bleibt erhalten.
- Keine Übergangszeiten zum Aktivieren/Deaktivieren erforderlich.
- Keine prinzipbedingten Drehmomentpendelungen.
- Für U/f-Steuerung und Vektorregelungen geeignet.
- Keine Istwerte, nur Maschinenparameter erforderlich.

**Patentansprüche**

1. Verfahren zum Bremsen einer drehzahlveränderbaren Asynchronmaschine (2), die von einem spannungseinprägenden Umrichter (4) gespeist wird, dessen Regeleinrichtung (6) einen Spannungs-Sollzeiger ($\underline{U}^*$) als Stellgröße bereitstellt, wobei während eines Bremsvorgangs dieser Spannungs-Sollzeiger ($\underline{U}^*$) derart mittels eines Zusatzsignals ($\Delta\underline{U}^*$) moduliert wird, dass in der Asynchronmaschine (2) hohe Verluste entstehen.

2. Verfahren nach Anspruch 1,
   **dadurch gekennzeichnet, dass** das Zusatzsignal ($\Delta\underline{U}^*$) ein Wechselsignal ist, dessen Frequenzwert größer als der Kehrwert einer Läuferzeitkonstante ($\tau_R$) der drehzahlgeregelten Asynchronmaschine (2) ist.

3. Verfahren nach Anspruch 1 oder 2,
   **dadurch gekennzeichnet, dass** das Zusatzsignal ($\Delta\underline{U}^*$) derart ausgebildet ist, dass ein Läuferstrom ($\underline{i}_R$) einen annähernd rechteckförmigen Verlauf aufweist, deren Ober- und Untergrenze von der Stromtragfähigkeit des spannungseinprägenden Umrichters (4) bestimmt werden.

4. Verfahren nach einem der vorgenannten Ansprüche,
   **dadurch gekennzeichnet, dass** das Zusatzsignal ($\Delta\underline{U}^*$) derart ausgebildet ist, dass sein Integral keinen Gleichanteil aufweist.

5. Verfahren nach einem der vorgenannten Ansprüche,
   **dadurch gekennzeichnet, dass** das Zusatzsignal ($\Delta\underline{U}^*$) während des Bremsens derart zu- und abgeschaltet wird, dass das Integral des Integrals des Zusatzsignals ($\Delta\underline{U}^*$) mittelwertfrei ist.

6. Verfahren nach Anspruch 4,
   **dadurch gekennzeichnet, dass** die läuferflussorientierten Komponenten ($\Delta U_d^*$, $\Delta U_q^*$) des Zusatzsignals ($\Delta\underline{U}^*$) unter Berücksichtigung des Ständerwiderstandes ($R_S$) gemäß folgender Gleichung:

$$\Delta U_d^* = \Delta\dot{\Psi}_{Sd} + \frac{R_S}{L_\sigma} \cdot \Delta\Psi_{Sd}$$

   und

$$\Delta U_q^* = \omega_S \cdot \Delta\Psi_{Sd}$$

   berechnet werden.

7. Verfahren nach Anspruch 4,
   **dadurch gekennzeichnet, dass** die läuferflussorientierten Komponenten ($\Delta U_d^*$, $\Delta U_q^*$) des Zusatzsignals ($\Delta\underline{U}^*$) unter Berücksichtigung der Ständer- und Läuferwiderstände ($R_S$, $R_R$) gemäß folgender Gleichung

$$\Delta U_d^* = \Delta\dot{\Psi}_{Sd} + \frac{(R_S + R_R)}{L\sigma}\Delta\Psi_{Sd}$$

   und

$$\Delta U_q^* = \omega_S \cdot \Delta\Psi_{Sd}$$

   berechnet werden.

8. Verfahren nach Anspruch 4,
   **dadurch gekennzeichnet, dass** die läuferflussorientierten Komponenten ($\Delta U_d^*$, $\Delta U_q^*$) des Zusatzsignals ($\Delta\underline{U}^*$) unter Berücksichtigung der Annahme, dass der Ständerwiderstand ($R_S$) annähernd Null ist, gemäß folgenden Gleichungen:

$$\Delta U_d^* = \Delta \dot{\Psi}_{Sd}$$

und

$$\Delta U_q^* = \omega_S \cdot \Delta \Psi_{Sd}$$

berechnet werden.

9. Verfahren nach einem der vorgenannten Ansprüche,
   **dadurch gekennzeichnet, dass** das Zusatzsignal ($\Delta \underline{U}^*$) auf den Betrag ($|\underline{U}|^*$) des Spannungs-Sollzeigers ($\underline{U}^*$) aufgeschaltet wird.

10. Verfahren nach einem der Ansprüche 1 bis 8,
    **dadurch gekennzeichnet, dass** das Zusatzsignal ($\Delta \underline{U}^*$) auf den Winkel ($\alpha^*$) des Spannungs-Sollzeigers ($\underline{U}^*$) aufgeschaltet wird.

11. Verfahren nach einem der Ansprüche 1 bis 8,
    **dadurch gekennzeichnet, dass** das Zusatzsignal ($\Delta \underline{U}^*$) auf die Frequenz ($f^*$) des Spannungs-Sollzeigers ($\underline{U}^*$) aufgeschaltet wird.

12. Verfahren nach einem der Ansprüche 1 bis 8 mit läuferflussorientierten Komponenten ($u_{Sd}^*$, $u_{Sq}^*$) des Spannungs-Sollzeigers ($\underline{U}^*$), **dadurch gekennzeichnet,**
    **dass** das Zusatzsignal ($\Delta \underline{U}^*$) komponentenweise auf den Spannungs-Sollzeiger ($\underline{U}^*$) aufgeschaltet wird.

13. Verfahren nach einem der vorgenannten Ansprüche,
    **dadurch gekennzeichnet, dass** die Aufschaltung des Zusatzsignals ($\Delta \underline{U}^*$) vom Anstieg einer Zwischenkreisspannung ($U_{zk}$) des spannungseinprägenden Umrichters (4) abhängt.

14. Verfahren nach einem der Ansprüche 1 bis 12,
    **dadurch gekennzeichnet, dass** das Zusatzsignal ($\Delta \underline{U}^*$) zugeschaltet wird, so bald ein DrehzahlSollwert ($n^*$) unterhalb eines Drehzahl-Istwert (n) liegt.

15. Verfahren nach einem der Ansprüche 1 bis 12,
    **dadurch gekennzeichnet, dass** das Zusatzsignal ($\Delta \underline{U}^*$) zugeschaltet wird, sobald ein Frequenz-Sollwert ($f^*$) unterhalb eines Frequenz-Istwertes (f) liegt.

16. Vorrichtung (8) zur Durchführung des Verfahrens zum Bremsen einer drehzahlveränderbaren Asynchronmaschine (2), die eingangsseitig mit einem spannungseinprägenden Umrichter (4) verknüpft ist, der eine Regeleinrichtung (6) mit einem Stellerausgang aufweist, wobei diese Vorrichtung (8) eine Signalquelle (10), ein Netzwerk (12) und eine Aufschalteinrichtung (14) aufweist, wobei am Eingang der Signalquelle (10) ein Betätigungssignal ($S_{EA}$) und an dessen Ausgang ein Wechselsignal (X) ansteht, wobei der Ausgang der Signalquelle (10) mit einem Eingang des Netzwerkes (12) verknüpft ist, wobei an weiteren Eingängen des Netzwerks (12) Regler- und Streckenparameter (P) anstehen und wobei das Netzwerk (12) ausgangsseitig mit Eingängen der Aufschalteinrichtung (14) verknüpft ist, dessen zweiten Eingang mit dem Stellerausgang der Regeleinrichtung (6) und dessen Ausgang mit einem Eingang eines im spannungseinprägenden Umrichters (4) angeordneten Steuersatzes verbunden sind.

17. Vorrichtung (8) nach Anspruch 16,
    **dadurch gekennzeichnet, dass** die Aufschalteinrichtung (14) wenigstens einen Vektordreher (16), eine Einrichtung (18) zur Generierung eines Spannungswinkels ($\gamma$), einen Koordinatenwandler (24) und zwei Addierer (22, 28) aufweist, dass an den Eingängen der Einrichtung (18) Werte einer Ständer-Wirkleistung ($P_S$), einer Ständerfrequenz ($\omega_S$) und von Maschinenparameter ($R_S$, $L_h$) anstehen, dass die Einrichtung (18) ausgangsseitig mit einem Winkeleingang des Vektordrehers (16) verbunden ist, der eingangsseitig mit den Ausgängen des Netzwerkes (12) verknüpft ist, dass die beiden Ausgänge (20, 26) des Vektordrehers (16) einerseits mittels des ersten Addierers (22) und andererseits direkt jeweils mit einem Eingang des Koordinatenwandlers (24) verbunden sind, dass die Ausgänge des Koordinatenwandlers (24) einerseits direkt und andererseits mittels des zweiten Addierers (28) mit Eingängen des Steuersatzes des Umrichters (4) verknüpft sind, und dass jeweils der zweite Eingang der beiden Addierer (22, 28) mit einem Ausgang der Regeleinrichtung (6) verbunden sind.

18. Vorrichtung (8) nach Anspruch 17,
**dadurch gekennzeichnet, dass** ein weiterer Addierer (32) und ein Subtrahierer (30) vorgesehen sind, dass ein erster Eingang des weiteren Addierers (32) mit einem zweiten Eingang des Subtrahierers (30) verknüpft sind, dass ein erster Eingang des Subtrahierers (30) mit einem Betrags-Ausgang des Koordinatenwandlers (24) und dass ein zweiter Eingang des weiteren Addierers mit einem Stellerausgang der Regeleinrichtung (6) und dessen Ausgang mit einem Eingang des Steuersatzes des Umrichters (4) verbunden sind.

19. Vorrichtung (8) nach einem der Ansprüche 16 bis 18,
**dadurch gekennzeichnet, dass** die Signalquelle (10) einen Zweipunkt-Regler (40) aufweist, dessen Ausgang ein Begrenzer (44) nachgeschaltet ist, der ausgangsseitig mittels eines Integrierers (42) auf einen invertierten Eingang eines Vergleichers (46) geschaltet ist, dessen Ausgang mit einem Eingang des Zweipunkt-Reglers (40) verknüpft ist.

20. Vorrichtung (8) nach einem der Ansprüche 16 bis 19,
**dadurch gekennzeichnet, dass** als Netzwerk (12) eine Recheneinrichtung vorgesehen ist, in der die Gleichungen des Anspruchs 6 berechnet werden.

# FIG 1

# FIG 2

# FIG 3

## FIG 4

## FIG 5

## FIG 6

# FIG 7

FIG 8

FIG 9

FIG 10

# FIG 11

# FIG 12

## FIG 13

## FIG 14

# FIG 15

## FIG 16

EP 1 487 095 A1

# FIG 17

EP 1 487 095 A1

EP 1 487 095 A1

# FIG 18

# FIG 19

# FIG 20

# FIG 21

FIG 22

**Europäisches Patentamt**

## EUROPÄISCHER RECHERCHENBERICHT

Nummer der Anmeldung

EP 04 00 8989

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 198 46 079 A (STROMAG AG) 13. April 2000 (2000-04-13) | 1,16 | H02P3/18 H02P21/00 |
| A | * das ganze Dokument * | 2-15, 17-20 | H02P23/00 |
| X | WO 90/01828 A (DIGIMOTO OF SWEDEN AB) 22. Februar 1990 (1990-02-22) | 1,16 | |
| A | * Zusammenfassung; Abbildungen 2,3 * | 2-15, 17-20 | |
| D,X | EP 1 077 527 A (WEG AUTOMACAO LTDA ; HOLTZ JOACHIM PROF DR ING (DE)) 21. Februar 2001 (2001-02-21) | 1,16 | |
| A | * Anspruch 1; Abbildung 6 * | 2-15, 17-20 | |
| X | DE 199 46 428 A (ROBICON CORP) 27. April 2000 (2000-04-27) | 1,16 | |
| A | * Zusammenfassung; Abbildung 4 * | 2-15, 17-20 | |
| A | US 5 583 412 A (NIELSEN HENRIK B) 10. Dezember 1996 (1996-12-10) * Zusammenfassung * | | RECHERCHIERTE SACHGEBIETE (Int.Cl.7) H02P |
| A | US 5 179 336 A (ORGOVAN ANDREW J) 12. Januar 1993 (1993-01-12) | | |
| D,A | DE 195 09 974 A (ABB INDUSTRY OY) 9. November 1995 (1995-11-09) | | |

Der vorliegende Recherchenbericht wurde für alle Patentansprüche erstellt

| Recherchenort | Abschlußdatum der Recherche | Prüfer |
|---|---|---|
| Den Haag | 30. September 2004 | Segaert, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 04 00 8989

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 19846079 | A | 13-04-2000 | DE | 19846079 A1 | 13-04-2000 |
| WO 9001828 | A | 22-02-1990 | SE | 461947 B | 09-04-1990 |
| | | | SE | 8802844 A | 09-02-1990 |
| | | | WO | 9001828 A1 | 22-02-1990 |
| EP 1077527 | A | 21-02-2001 | EP | 1077527 A1 | 21-02-2001 |
| | | | AT | 218253 T | 15-06-2002 |
| | | | BR | 0003903 A | 12-06-2001 |
| | | | CN | 1285652 A | 28-02-2001 |
| | | | DE | 69901609 D1 | 04-07-2002 |
| | | | DE | 69901609 T2 | 21-11-2002 |
| | | | US | 6326762 B1 | 04-12-2001 |
| DE 19946428 | A | 27-04-2000 | US | 6262555 B1 | 17-07-2001 |
| | | | AU | 754287 B2 | 14-11-2002 |
| | | | AU | 5012699 A | 06-04-2000 |
| | | | BR | 9904417 A | 15-08-2000 |
| | | | CA | 2282802 A1 | 02-04-2000 |
| | | | CN | 1250245 A | 12-04-2000 |
| | | | DE | 19946428 A1 | 27-04-2000 |
| | | | GB | 2343306 A ,B | 03-05-2000 |
| | | | IT | RM990603 A1 | 02-04-2001 |
| | | | JP | 3435104 B2 | 11-08-2003 |
| | | | JP | 2000116166 A | 21-04-2000 |
| | | | NL | 1013189 C2 | 21-06-2002 |
| | | | NL | 1013189 A1 | 04-04-2000 |
| | | | US | 2001019253 A1 | 06-09-2001 |
| US 5583412 | A | 10-12-1996 | KEINE | | |
| US 5179336 | A | 12-01-1993 | CA | 2070361 A1 | 09-01-1993 |
| DE 19509974 | A | 09-11-1995 | FI | 941404 A | 26-09-1995 |
| | | | DE | 19509974 A1 | 09-11-1995 |
| | | | FR | 2717965 A1 | 29-09-1995 |
| | | | GB | 2287844 A ,B | 27-09-1995 |
| | | | IT | T0950228 A1 | 25-09-1995 |
| | | | JP | 7298662 A | 10-11-1995 |
| | | | JP | 2002199770 A | 12-07-2002 |
| | | | US | 5532568 A | 02-07-1996 |

EPO FORM P0461

Für nähere Einzelheiten zu diesem Anhang : siehe Amtsblatt des Europäischen Patentamts, Nr.12/82